Europäisches Patentamt

European Patent Office

Office européen des brevets

(19)

(11) Veröffentlichungsnummer : **0 212 089**
B1

(12) **EUROPÄISCHE PATENTSCHRIFT**

(45) Veröffentlichungstag der Patentschrift :
**09.11.88**

(21) Anmeldenummer : **86107215.5**

(22) Anmeldetag : **28.05.86**

(51) Int. Cl.⁴ : **F 16 D 25/14**

(54) **Betätigungskraftverstärker für Kraftfahrzeuge.**

(30) Priorität : **25.07.85 DE 3526567**
**07.11.85 DE 3539562**

(43) Veröffentlichungstag der Anmeldung :
**04.03.87 Patentblatt 87/10**

(45) Bekanntmachung des Hinweises auf die Patenterteilung : **09.11.88 Patentblatt 88/45**

(84) Benannte Vertragsstaaten :
**AT DE FR GB IT NL SE**

(56) Entgegenhaltungen :
**DE-A- 2 631 065**
**GB-A- 2 055 168**

(73) Patentinhaber : **M A N Nutzfahrzeuge GmbH**
**Dachauer Strasse 667 Postfach 50 06 20**
**D-8000 München 50 (DE)**

(72) Erfinder : **Greppmeier, Georg**
**Hauptstrasse 27**
**D-8069 Jetzendorf (DE)**
Erfinder : **Arzberger, Thomas**
**Eversbuschstrasse 169b**
**D-8000 München 50 (DE)**

**Beschreibung**

Die Erfindung betrifft einen Betätigungskraftverstärker für ein Kraftfahrzeug, und zwar vorzugsweise einen Lastkraftwagen oder einen Omnibus, gemäß dem Oberbegriff des Anspruchs 1.

Ein solcher Betätigungskraftverstärker (siehe z. B. GB-A-2 055 168), wird bevorzugt als Kupplungskraftverstärker zwischen dem Antriebsmotor und dem Fahrgetriebe eingesetzt, kann aber auch für andere Zwecke verwendet werden, z. B. zur Steuerung von Hubeinrichtungen oder dgl.

Ein bekannter Betätigungskraftverstärker der eingangs genannten Art ist in einem hydraulischen Kreis angeordnet, der einen mit einem Kupplungspedal verbundenen Hauptzylinder aufweist, in welchem die Betätigungskraft einer Bedienungsperson, die auf das Kupplungspedal tritt, in einen hydraulischen Druck umgewandelt wird.

Das unter diesem Druck stehende hydraulische Strömungsmittel wird einem Steuerzylinder zugeführt, dessen Kolben mit dem Kolben eines mit Druckluft beaufschlagbaren Arbeitszylinders starr verbunden ist. Dieser Arbeitskolben bzw. Arbeitszylinder ist so in Abstimmung auf den zur Verfügung stehenden Luftdruck bemessen, daß er imstande ist, den Kolben und eine mit diesem verbundene Betätigungsstange mit einer wesentlich höheren Kraft zu bewegen, als diese vom Steuerkolben selbst ausgeübt werden kann.

Um die Druckluftbeaufschlagung des Arbeitszylinders in Abhängigkeit von dem Druck im hydraulischen Kreis oder der Lage des Steuerzylinders zu steuern, ist ein Druckregulierventil vorgesehen, welches auf die Lage des Steuerzylinders oder den Druck im hydraulischen Kreis anspricht und entsprechend den Arbeitszylinder mit Druckluft beaufschlagt.

Das Druckregulierventil führt diese Druckbeaufschlagung in seiner Arbeitslage durch.

Wenn der Fuß der Bedienungsperson auf dem Kupplungspedal zurückgenommen wird, dann sinkt entsprechend der Druck im hydraulischen Kreis und das Druckregulierventil nimmt eine solche Lage ein, daß der Arbeitszylinder in einem solchen Maße entlüftet wird, bis der mit diesem verbundene Steuerzylinder jene Lage einnimmt, welche der gerade vorliegenden Lage des Kupplungspedales entspricht. Wird dieses völlig frei gegeben, dann fällt der Druck im hydraulischen Kreis ab und das Druckregulierventil nimmt seine Ruhelage ein, in welcher es den Arbeitszylinder ständig mit einem Entlüftungsanschluß verbindet. In diesem Zustand befinden sich die beiden miteinander verbundenen Kolben in ihrer jeweiligen Ausgangslage.

In manchen Fällen ist es erwünscht, daß die Kupplung nicht nur über Kupplungspedal, sondern auch über einen Servomechanismus betätigt werden kann. Dieser Fall ist beispielsweise dann gegeben, wenn der Schaltvorgang dahingehend automatisiert wird, daß beim Einlegen der Gänge die Bedienung der Kupplung selbsttätig erfolgen soll, ohne daß jedoch auf das Kupplungspedal verzichtet wird, welches etwa dann erforderlich ist, wenn auf schwierigem Untergrund, z. B. auf schlammigem oder brandigem Boden, der Anfahrvorgang mit besonderer Feinfühligkeit erfolgen soll, um ein Durchdrehen der Räder und somit ein Festsitzen des Fahrzeuges zu verhindern.

Auch in anderen Fällen kann eine Fernbedienung eines Fahrzeug-Kupplungspedales erforderlich sein, etwa bei einem Schulfahrzeug, bei welchem der Fahrlehrer über ein eigenes Kupplungspedal verfügen kann, oder auch bei dem Baustellen- oder Schienenfahrzeug mit mehreren Fahrerständen, einer Hubeinrichtung, die von mehreren Stellen aus bedient werden soll, oder dgl..

In diesen Fällen war es bisher erforderlich, parallel zum Betätigungskraftverstärker einen gesonderten Servozylinder so anzubringen daß er imstande war, die vom Betätigungskraftverstärker zu bedienende Einrichtung unabhängig von diesem seinerseits zu bedienen.

Ein solcher zusätzlicher Servozylinder fordert aber einen ganz erheblichen zusätzlichen Bauaufwand, zumal gerade in den räumlich sehr beengten Einbauverhältnissen, die am Getriebeeingang eines Kraftfahrzeuges vorliegen, ein zusätzlicher Arbeitszylinder nur schwer unterzubringen ist.

Ausgehend von diesen Schwierigkeiten liegt der Erfindung die Aufgabe zugrunde, den eingangs genannten, bekannten Betätigungskraftverstärker dahingehend weiterzubilden, daß er mit nur geringem zusätzlichem Aufwand von mindestens einer weiteren Bedienungsstelle aus betätigbar ist, und zwar vorzugsweise fernbetätigbar.

Diese Aufgabe wird durch die Merkmale des Anspruchs 1 gelöst.

Die Lösung besteht im wesentlichen darin; daß der Arbeitskolben des bekannten Betätigungskraftverstärkers auch dann mit Druckluft beaufschlagbar ist, wenn gleichzeitig der Steuerzylinder nicht von einem hydraulischen Steuerdruck beaufschlagt wird.

Hierbei ist erfindungsgemäß durch eine Kupplung die Verbindung zwischen Steuer- und Arbeitskolben dann lösbar, wenn der Arbeitszylinder alleine mit Druckluft beaufschlagt wird, da sonst die Druckverhältnisse im hydraulischen Steuerkreis gestört würden und die Bewegung des Arbeitskolbens behindert würde.

Es ist grundsätzlich möglich, den Arbeitszylinder mit einem gesonderten, Druckluftanschluß auszubilden, der über das erfindungsgemäß vorgesehene Druckluftventil an die Vorratsluft bzw. Druckluftzufuhr anschließbar ist. Der Arbeitszylinder kann somit stets in seine Arbeitslage gebracht werden, und zwar unabhängig von jener Lage, die zu diesem Zeitpunkt gerade der Steuerkolben einnimmt.

Es ist aber — was erfindungsgemäß bevorzugt ist — auch möglich die Druckluftzufuhr über das erfindungsgemäße Druckluftventil mit dem Entlüftungsanschluß des Druckregulierventils zu verbinden, wobei durch entsprechende Ausgestaltung dieses Druckregulierventils dafür Sorge getragen sein kann, daß etwa bei zunehmendem Druck im hydraulischen Steuerkreis der Ventilschieber des Druckregulierventils eine solche Lage einnimmt, daß er dessen Entlüftungsanschluß absperrt. Es ist somit bei dieser Ausgestaltung der Erfindung der Arbeitskolben zwar sowohl durch Erhöhen des hydraulischen Drucks im Steuerströmungsmittel als auch durch unmittelbare Druckluftzufuhr über das Druckluftventil bewegbar, die Ansteuerung über das Steuerströmungsmittel besitzt aber Vorrang, so daß bei der Anwendung der erfindungsgemäßen Ausgestaltung an einer Fahrzeugkupplung der Ausrückvorgang selbst dann, wenn das Druckluftventil geöffnet wird, vom Kupplungspedal übernommen wird, wenn dieses niedergedrückt wird. Erst dann, wenn das Druckregulierventil eine solche Lage einnimmt, daß die Entlüftung des Arbeitszylinders erfolgen soll wird wieder eine Verbindung zwischen dem Arbeitszylinder und der Vorratsluft über das Druckluftventil hergestellt.

Es kann ferner auch von Vorteil sein, das Druckluftventil seinerseits mit einem Fühler für den hydraulischen Steuerdruck zu verbinden, so daß beliebige Vorrangschaltungen erzielt werden können. So kann z. B. bei der Fahrt auf schwierigem Untergrund z. B. bei vereister Straße, durch treten des Kupplungspedales der gerade laufende Einrückvorgang der Kupplung unterbrochen werden ; es ist somit möglich, das während des automatischen Schaltvorganges ausbrechende Fahrzeug durch niedertreten des Kupplungspedales wieder zu stabilisieren.

Es war bisher von dem Druckventil als eigenem, gesondertem Ventil die Rede. Es ist aber grundsätzlich auch möglich, das bereits vorhandene Druckregulierventil seinerseits zu dessen zusätzlicher Fernbedienung unabhängig von den Druckverhältnissen in der Hydraulik zu schalten.

Um eine gleichartige Betätigungscharakteristik zu erhalten, ist es ggf. von Vorteil, dem Arbeitszylinder über das Druckluftventil Luft mit einem ein wenig höheren Druck zuzuführen als über das Regulierventil, da bei der alleinigen Beaufschlagung des Arbeitskolbens dessen Unterstützung durch den Steuerkolben fehlt, wie sie dann stattfindet, wenn der Betätigungskraftverstärker über den zunehmenden hydraulischen Steuerdruck betätigt wird.

Wenn das Druckluftventil unmittelbar mit dem Arbeitszylinder verbunden ist, dann kann es als einfaches Absperrventil ausgebildet sein. Ist es jedoch mit dem Entlüftungsanschluß verbunden, dann ist es so ausgebildet, daß es in seiner Ruhelage den Entlüftungsanschluß mit der Umgebungsluft verbindet, in seiner Arbeitslage jedoch mit der Druckluftversorgung, um in seiner Ruhelage das ordnungsgemäße Entlüften des Arbeitszylinders beim Abfallen des hydraulischen Steuerdrucks sicherzustellen.

Gemäß einer bevorzugten Ausführungsform ist die Kupplung zwischen den beiden Kolben als eine teleskopartige Rohrverbindung ausgebildet, wobei in der Ruhelage die beiden Teile dieser Rohrverbindung so aufeinander aufsitzen, daß sie eine Druckkraft vom Steuerzylinder auf den Arbeitszylinder übertragen können.

Gemäß einer weiteren, bevorzugten Ausgestaltung der Erfindung ist das Druckluftventil ebenfalls als Druckregulierventil ausgebildet, so daß es nicht nur einfach die Bewegung des Arbeitskolbens in seiner Arbeitslage, sondern dessen feindosierbare und gesteuerte Bewegung zuläßt. Dieses Druckregulierventil kann beispielsweise einen Bedienungshebel aufweisen, der an der Lenksäule oder dem Armaturenbrett angebracht ist. Dem Fahrer ist es somit möglich, z. B. beim Anfahren am Berg mit beiden Füßen Gas bzw. Bremse zu betätigen um von Hand feindosierbar die Kupplung einzurücken.

Der Gegenstand der Erfindung ist anhand der beigefügten, schematischen Zeichnung beispielsweise noch näher erläutert. In dieser zeigt :

Fig. 1 einen Betätigungskraftverstärker aus dem Stand der Technik,

Fig. 2 ein Ausführungsbeispiel eines erfindungsgemäßen Betätigungskraftverstärkers, und

Fig. 3 die aus Steuer- und Arbeitszylinder gebildete Baueinheit für den in Fig. 2 dargestellten, erfindungsgemäßen Betätigungskraftverstärker.

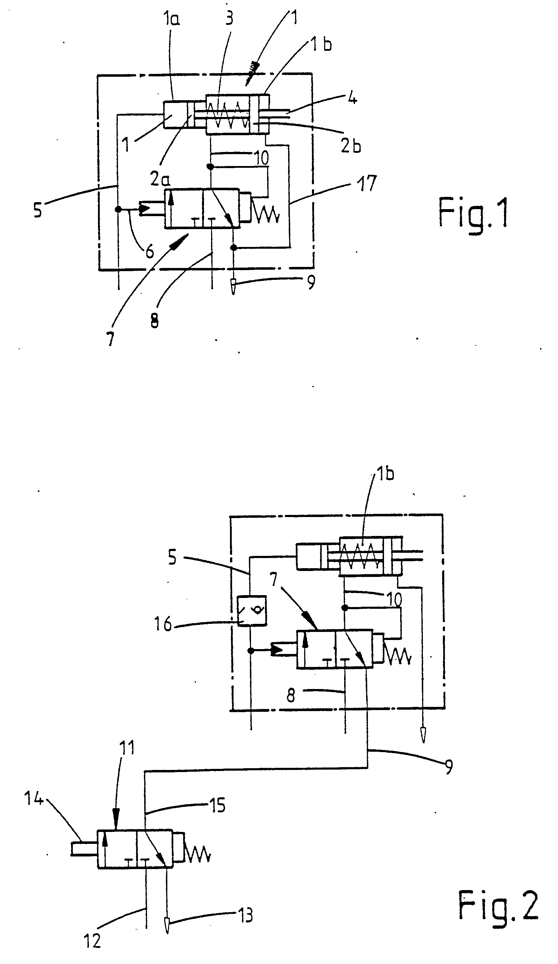

In Fig. 1 ist ein bekannter Betätigungskraftverstärker dargestellt, mit einem Kombizylinder 1, der aus einem Steuerzylinder 1a und einem Arbeitszylinder 1b gebildet ist, die koaxial hintereinanderliegend in einem gemeinsamen Gehäuse angebracht sind.

Im Steuerzylinder 1a ist ein Steuerkolben 2a beweglich angebracht, während im Arbeitszylinder 1b ein Arbeitskolben 2b beweglich angebracht ist.

Steuer- und Arbeitskolben 2a bzw. 2b sind miteinander starr durch eine Stange 3 verbunden. Auf der vom Steuerzylinder 1a abgewandten Seite des Arbeitskolbens 2b ist eine Betätigungsstange 4 angebracht, die aus dem Gehäuse des Kombizylinders 1 herausgeführt ist.

Eine Hydraulikleitung 5, die von einem durch eine Bedienungsperson betätigbaren Hauptzylinder herführt, ist mit dem Steuerzylinder 1a verbunden. Ferner ist mit der Hydraulikleitung 5 eine hydraulisch gesteuerte Betätigungseinrichtung 6 verbunden, welche ihrerseits mit einem Druckregulierventil 7 zu dessen Betätigung verbunden ist. Dieses weist eine Ruhelage (in Fig. 1 gezeigt) und eine Arbeitslage auf, in welcher der in der Zeichnung schematisch dargestellte Ventilschieber nach rechts verschoben ist.

Das Druckregulierventil 7 ist einerseits mit einer Druckluftzufuhr 8 und andererseits mit einem Entlüftungsanschluß 9 versehen. Ferner ist das Druckregulierventil 7 über Verbindungsleitung 10 mit dem Arbeitszylinder 1b verbunden.

Das Druckregulierventil 7 und der Kombizylinder 1 sind gemeinsam in einem Gehäuse untergebracht, das durch die strichpunktierte Umrißlinie versinnbildlicht ist.

In der gezeigten Ruhelage verbindet das Druckregulierventil 7 den Arbeitszylinder 1b über die Verbindungsleitung 10 mit dem Entlüftungsanschluß 9. In der Arbeitslage ist der Entlüftungsanschluß 9 abgesperrt und der Arbeitszylinder 1b über die Verbindungsleitung 10 und eine entsprechende Bohrung im Ventilschieber des Druckregulierventils 7 mit der Druckluftzufuhr 8 verbunden (Vorratsluft).

Bei Betätigung des nicht gezeigten Hydraulik-Hauptzylinders bewegt sich das Druckregulierventil 7 in Abhängigkeit von der Druckzunahme im hydraulischen Steuerdruck in seiner Arbeitslage, so daß der Arbeitszylinder 1b mit Druckluft beaufschlagt wird. Gleichzeitig wird der Steuerzylinder 1a mit dem Hydraulikdruck beaufschlagt. Beide Drücke wirken in die gleiche Richtung und trachten danach, die Betätigungsstange 4 in der Zeichnung nach rechts aus dem Gehäuse des Kombizylinders 1 herauszudrücken.

Der Arbeitszylinder 1b ist als einfachwirkender Zylinder ausgebildet; dessen unwirksamer Raum ist durch eine Entlüftungsleitung 17 mit dem Entlüftungsanschluß 9 verbunden.

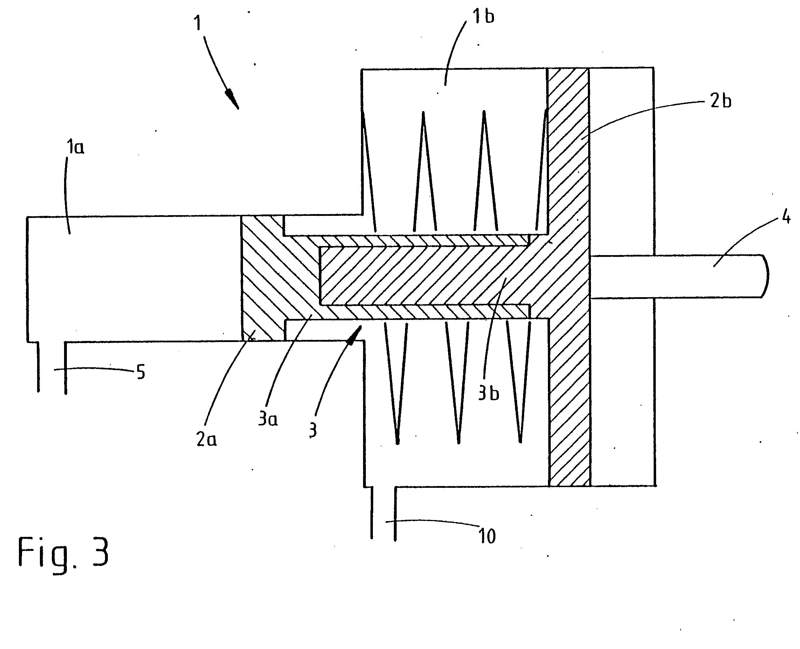

In Fig. 2 ist schematisch ein Ausführungsbeispiel des erfindungsgemäßen Betätigungskraftverstärkers dargestellt. Dieser weist den in Fig. 1 gezeigten, in einem Gehäuse integrierten, bekannten Betätigungskraftverstärker auf, dem jedoch ein Druckluftventil 11 vorgeschaltet ist. Dieses Druckluftventil 11 ähnelt dem Druckregulierventil 7 und weist eine Druckluftzufuhr 12, eine Entlüftung 13, einen Anschluß 15 und eine Bedienungseinrichtung 14 auf, die durch einen Elektromotor, Elektromagneten, pneumatisch, hydraulisch oder unmittelbar mechanisch ansteuerbar ist und die der Druckeinrichtung 6 zur Steuerung des Druckregulierventiles 7 entspricht.

In der gezeigten Ruhelage ist der Arbeitszylinder 1b über die Verbindungsleitung 10, das Druckregulierventil 7, den Entlüftungsanschluß 9, den Anschluß 15 des Druckluftventils 11 und dessen Entlüftungsanschluß 13 mit der Umgebungsluft verbunden. Wird der hydraulische Arbeitsdruck in der hydraulischen Leitung 5 erhöht, dann wird der strichpunktiert umrandete Betätigungskraftverstärker der Fig. 2 dem gleichen Funktionsablauf unterzogen wie im gleichen Fall der in Fig. 1 gezeigte, baulich übereinstimmende, bekannte Betätigungskraftverstärker. Dieser Funktionsablauf ist oben beschrieben.

Wird aber das Druckluftventil 11 in seine in der Zeichnung nicht gezeigte Anfangslage gebracht, also in der Zeichnung nach rechts verschoben, dann ist der Druckluftanschluß 12 über den Anschluß 15, den Entlüftungsanschluß 9 des Druckregulierventils 7 und die Verbindungsleitung 10 mit dem Arbeitszylinder 1b verbunden, solange sich das Druckregulierventil 7 seinerseits in seiner Ruhelage befindet. Wird jedoch dieses in seine Arbeitslagen versetzt, dann bleibt die Lage des Druckluftventiles 11 ohne Wirkung.

In Fig. 3 ist ein bevorzugtes Ausführungsbeispiel eines Kombizylinders 1 des erfindungsgemäßen Betätigungskraftverstärkers schematisch gezeigt. In dieser Figur zeigen gleiche Bezugszeichen gleiche Elemente wie in den vorangehenden Figuren.

Die Verbindungsstange 3 ist teleskopartig ausgebildet, mit einem Rohrteil 3a, das mit dem Steuerkolben 2a fest verbunden ist, und einem innerhalb des Rohrteils 3a teleskopartig aufgenommenen Stangenteil 3b, das mit dem Arbeitskolben 2b starr verbunden ist.

In der gezeigten Ruhelage oder dann, wenn durch Druckbeaufschlagung des Steuerzylinders 1a der Steuerkolben 2a in der Zeichnung nach rechts verschoben wird, stützen sich die beiden Stangenteile 3a, 3b axial so aufeinander ab, daß der Arbeitskolben 2b stets eine Lage einnimmt, welche jener des Steuerkolbens 2a entspricht.

Wird jedoch über die Verbindungsleitung 10 Druckluft in den Arbeitszylinder 1b eingelassen, ohne daß der Steuerzylinder 1a über die Hydraulikleitung 5 mit Druck beaufschlagt wird, dann vermag der Steuerkolben 2a in seiner Lage zu verharren, während sich die Teleskopstange 3b, verlängert und somit die freie Bewegung des Kolbens 2b in seine Arbeitslage (in der Zeichnung nach rechts) ermöglicht.

Damit der Steuerkolben 2a aber nicht durch die auf die Ringfläche des Rohrteils 3a der Verbindungsstange 3 wirkende Druckluft in seine Ausgangslage geschoben wird, ist in der hydraulischen Leitung 5 ein Rückschlagventil mit begrenzter Rückströmung 16, kurz Rückschlagventil m.b.R. genannt, eingesetzt, das auch im entspannten Zustand der Ölsäule einen geringen Druck im Steuerzylinderraum 1a aufrechterhält, der der auf die Ringfläche ausgeübten Kraft, diese geringfügig übersteigend, entgegenwirkt. Solcherart wird eine zusätzliche ggf. zu wiederholende Betätigung der Kupplung vermieden.

Es wurde oben erwähnt, daß der in Fig. 1 gezeigte erfindungsgemäße Betätigungskraftverstärker voll mit jenem übereinstimmt, der in Fig. 2 im Zusammenhang mit der Erfindung gezeigt ist. Dies trifft jedoch nur begrenzt zu: Die Verbindungsstange, die die beiden Kolben 2a, 2b des erfindungsgemäß verwendeten Betätigungskraftverstärkers verbindet, ist geteilt, so daß es den beiden ermöglicht ist sich auseinander zu bewegen. Dieses Unterschieds ungeachtet ist jedoch auch bei der Erfindung der bekannte Betätigungskraftverstärker verwendet; bei diesem ist lediglich die genannte Verbindungsstange gegen eine erfindungsgemäße, geteilte Verbindungsstange ausgetauscht. Auch beim Umrüsten eines vorhandenen Fahrzeugs ist es erforderlich, diese Verbindungsstange auszutauschen.

**Patentansprüche**

1. Betätigungskraftverstärker für ein Kraftfahrzeug, mit einem von hydraulischem Steuerströmungsmittel beaufschlagbaren Steuerzylinder (1a), in welchem ein Steuerkolben (2a) verschieblich angeordnet ist, einem von Druckluft beauf-

schlagbaren Arbeitszylinder (1b), in welchem ein Arbeitskolben (2b) beweglich angeordnet ist, der mit dem Steuerkolben (2a) und einer die verstärkte Betätigungskraft abgebenden Betätigungstange (4) verbunden ist, einem Druckluft-Regulierventil (7), das zwischen dem Arbeitszylinder (1b) und einer Druckluftzufuhr (8) angebracht ist und aus einer Ruhelage, in welche es den Arbeitszylinder mit einem Entlüftungsanschluß (9) verbindet, in eine Arbeitslage in Abhängigkeit von der Lage des Steuerkolbens oder dem Druck im Steuerströmungsmittel beweglich ist, dadurch gekennzeichnet, daß ein bevorzugt fernschaltbares Druckluftventil (11) unmittelbar mit dem Arbeitszylinder (1b) oder mit dem Entlüftungsanschluß (9) verbunden ist und diesen in Ruhelage mit der Umgebungsluft und in der Arbeitslage mit der Druckluftzufuhr (8) oder einer gesonderten Druckluftzufuhr (12) verbindet, und daß in der Verbindung zwischen Steuer- und Arbeitskolben (2a, 2b) eine bei Betätigung des Druckluftventils (11) lösbare Kupplung (3a, 3b) angeordnet ist.

2. Betätigungskraftverstärker nach Anspruch 1, dadurch gekennzeichnet, daß der Steuerkolben (2a) eine rohrartige, zum anderen Kolben (2b) hinweisende Hülse (3a) aufweist, in welcher kolbenartig eine an diesem anderen Kolben angebrachte Stange (3b) geführt ist.

3. Betätigungskraftverstärker nach einem der Ansprüche 1 oder 2, dadurch gekennzeichnet, daß das Druckluftventil (11) ebenfalls als Druckregulierventil ausgebildet ist.

4. Betätigungskraftverstärker nach den Ansprüchen 1 bis 3, dadurch gekennzeichnet, daß dem Steuerzylinder (1a) ein Rückschlagventil mit begrenzter Rückströmung (16), in der hydraulischen Leitung (5) angeordnet, vorgeschaltet ist.

## Claims

1. A power assistance device for a motor vehicle, the device comprising : a control cylinder (1a) which is adapted to be actuated by a hydraulic control flow medium and in which a control piston (2a) is disposed for movement ; a work cylinder (1b) which is adapted to be actuated by compressed air and in which a work piston (2b) is disposed for movement, the work piston being connected to the control piston (2a) and to an operating rod (4) for transmitting the amplified actuating force ; a compressed air control valve (7) which is disposed between the work cylinder (1b) and a compressed air supply (8) and which is movable from a normal position, in which it connects the work cylinder to an exhaust connection (9), into an operative position in dependence upon the position of the control piston (2a) or upon the pressure in the control flow medium, characterised in that a preferably remotely controllable compressed air valve (11) is directly connected to the work cylinder (1b) or to the exhaust connection (9) and in the normal position connects the exhaust connection (9) to atmosphere and in the operative position connects the exhaust connection (9) to the compressed air supply (8) or to a separate compressed air supply (12), and a coupling (3a, 3b) releasable upon operation of the compressed air valve (11) is disposed in the connection between the control piston (2a) and the work piston (2b).

2. A device according to claim 1, characterised in that the control piston (2a) has a tubular sleeve (3a) which extends towards the other piston (2b) and in which a rod (3b) of such other piston is guided piston-fashion.

3. A device according to claim 1 and/or 2, characterised in that the compressed air valve (11) is also a pressure-controlling valve.

4. A device according to claims 1-3, characterised in that a limited-return check valve (16) disposed in the hydraulic line (5) is provided before the control cylinder (1a).

## Revendications

1. Amplificateur de pression d'actionnement pour un véhicule automobile, avec un cylindre de commande (1a) pouvant être sollicité par un fluide de commande hydraulique et dans lequel un piston de commande (2a) est disposé pour coulisser, un cylindre de travail (1b) pouvant être sollicité par de l'air comprimé et dans lequel un piston de travail (2b) est disposé pour se déplacer, ce piston étant relié au piston de commande (2a) et à une tige d'actionnement (4) fournissant la force d'actionnement amplifiée, une soupape de régulation d'air comprimé (7) disposée entre le cylindre de travail (1b) et une amenée d'air comprimé (8) et mobile depuis une position de repos, dans laquelle elle relie le cylindre de travail à un raccord de purge d'air (9), dans une position de travail en fonction de la position du piston de commande ou de la pression du fluide de commande, caractérisé en ce qu'une soupape à air comprimé (11), de préférence télécommandée, est directement reliée au cylindre de travail (1b) ou au raccord de purge d'air (9) et raccorde celui-ci, dans la position de repos, à l'air ambiant et, dans la position de travail, à l'amenée d'air comprimé (8) ou à une amenée d'air comprimé séparée (12), et en ce que dans la liaison entre le piston de commande (2a) et le piston de travail (2b) est disposé un accouplement (3a, 3b) amovible lorsque la soupape à air comprimé (11) est actionnée.

2. Amplificateur de pression d'actionnement selon la revendication 1, caractérisé en ce que le piston de commande (2a) comporte une douille (3a) dirigée comme un tube vers l'autre piston (2b), une tige (3b) disposée sur cet autre piston étant guidée dans cette douille à la manière d'un piston.

3. Amplificateur de pression d'actionnement selon l'une des revendications 1 ou 2, caractérisé en ce que la soupape à air comprimé (11) est également réalisée en tant que soupape de régulation de pression.

4. Amplificateur de pression d'actionnement selon les revendications 1 à 3, caractérisé en ce qu'un clapet de retenue à flux de retour limité (16) est monté devant le cylindre de commande (1a) en étant disposé dans la conduite hydraulique (5).

Fig.1

Fig.2

Fig. 3